# EUROPEAN PATENT APPLICATION

(11) **EP 3 943 449 A1**
(43) Date of publication of application: **26.01.2022**
(21) Application number: 20791358.3
(22) Date of filing: 15.04.2020
(51) Int. Cl.: C01B 33/18, C09D 183/04, C09D 7/20, C09D 7/61, F16L 59/02

(54) **HEAT INSULATING MATERIAL, ENGINE COMPRISING HEAT INSULATING MATERIAL, NANOPARTICLE DISPERSION LIQUID, AND PRODUCTION METHOD FOR HEAT INSULATING MATERIAL**

(30) Priority: 15.04.2019 JP 2019076798
(71) Applicant: MAZDA MOTOR CORPORATION, Hiroshima 730-8670 (JP)
(72) Inventor: KOGA Hiroyuki, Aki-gun, Hiroshima 730-8670 (JP); KADOSHIMA Shinji, Aki-gun, Hiroshima 730-8670 (JP); YAMAMOTO Kazuaki, Aki-gun, Hiroshima 730-8670 (JP)
(74) Representative: Müller-Boré & Partner Patentanwälte PartG mbB
(86) International application number: PCT/JP2020/016552
(87) International publication number: WO 2020/213637

(57) **Abstract**

A heat insulating layer 11 contains many hollow particles 12, a silicone-based resin binder 13, and silica nanoparticle 14. The percentage of the silica nanoparticles 14 in the total amount of the resin binder 13 and the silica nanoparticles 14 is equal to or greater than 10% by volume and equal to or smaller than 55% by volume.

## Description

### TECHNICAL FIELD

The present invention relates to a heat insulating material, an engine including the heat insulating material, nanoparticle dispersion liquid suitable for production of the heat insulating material etc., and the method for producing the heat insulating material etc.

### BACKGROUND

For enhancing an energy efficiency, various heat insulating materials have been typically used for industrial equipment and customer equipment, and research and development of the heat insulating material have been also conducted. For example, for enhancing the thermal efficiency of an engine in a motor vehicle, research and development of a heat insulating layer provided on a wall surface forming a combustion chamber of the engine have progressed. Recovery of waste heat from, e.g., an exhaust system of the engine is one of important needs for the motor vehicle, and for this reason, a heat insulating material with a favorable efficiency has been demanded.

An example of such a heat insulating layer used for, e.g., the engine is described in Patent Document 1. The heat insulating layer includes many hollow particles and a silicone-based binder, and the binder contains nanoparticles and crushed shells formed by crushing of the hollow particles. In Patent Document 1, the content of the nanoparticles in the heat insulating layer is 0.5% to 10% by volume, and when the content is 1% by volume, heat resistance is considered to be the best.

Patent Document 2 describes a repair coating composition for a heat insulating layer of a turbine component. This composition contains 10% to 60% by weight of a solvent, 5% to 55% by weight of solid ceramic particles, 5% to 45% by weight of hollow ceramic particles, and 6% to 40% by weight of a silica precursor binder. A repair coating containing the solid ceramic particles and the hollow ceramic particles in a silica matrix is obtained by thermodecomposition of a binder. Patent Document 2 describes that anhydrous alcohol, acetone, or trichloroethylene is used as the solvent, alumina, magnesia, titania, or calcia is used as the solid ceramic particle, and the particle size of the solid ceramic particle is 0.01 µm to 100 µm.

In addition, Patent Document 3 relates to a stable dispersion element with solid particles in a hydrophobic solvent used for cosmetics, and discloses that the hydrophobic solvent is silicone fluid having a solubility parameter (γ) of equal to or smaller than about 8 and contains vinyl copolymer and silica particles as the solid particles having a number-weight average particle size of about 10 nm to about 100 µm.

### CITATION LIST

### PATENT DOCUMENT

Patent Document 1: Japanese Patent No. 6390643
Patent Document 2: Japanese Patent No. 5208864
Patent Document 3: Japanese Unexamined Patent Publication (Japanese Translation of PCT Application) No. 2011-504185

### SUMMARY

### TECHNICAL PROBLEM

The heat insulating layer formed on a surface of a base material shrinks when exposed to high heat. Since such shrinkage deformation is restrained by the base material, tensile stress is generated inside the heat insulating layer. As a result, cracks may occur in the heat insulating layer. Further, a high pressure is applied to the heat insulating layer provided on the wall surface of the combustion chamber of the engine, and further, a pressure impact wave might be applied to the heat insulating layer. As a result, the heat insulating layer might be detached from the wall surface of the combustion chamber. For this reason, it is an object to enhance the heat resistance of the heat insulating layer.

In a case where the heat insulating material etc. are produced using a silicone-based resin solution in which silica nanoparticles are dispersed, there is a problem that defects (voids) occur in the heat insulating material etc. when a dispersibility is low and a silica nanoparticle content is high.

### SOLUTION TO THE PROBLEMS

A heat insulating material disclosed herein is a heat insulating material containing many hollow particles, a silicone-based resin binder, and nanoparticles. An inorganic nanoparticle is contained as the nanoparticle. The percentage of the inorganic nanoparticles in the total amount of the resin binder and the inorganic nanoparticles is equal to or greater than 10% by volume and equal to or smaller than 55% by volume.

With the heat insulating material described in Patent Document 1, tensile stress accompanied by the above-described thermal shrinkage is dispersed and cracks are reduced by addition of the crushed shells of the hollow particles and the nanoparticles to the binder. However, an increase in the content of the nanoparticles is denied in terms of improvement of the durability of the heat insulating material.

On the other hand, in the present invention, thermal degradation of the resin binder is reduced by an increase in the blending amount of the inorganic nanoparticles. This point will be described. First, it has been assumed that the thermal degradation of the resin binder is caused by diffusion of oxygen radicals generated in the resin binder. On the other hand, the inorganic nanoparticles decrease the diffusion rate of the above-described oxygen radicals to reduce the above-described thermal degradation. The inorganic nanoparticles reduce molecular motion of the resin binder to reduce the thermal degradation thereof. Such an effect of reducing the thermal degradation becomes noticeable when the percentage of the inorganic nanoparticles in the total amount of the resin binder and the inorganic nanoparticles is equal to or greater than 10% by volume. Such a percentage is more preferably equal to or greater than 20% by volume.

The greater the blending amount of the inorganic nanoparticles is, the more advantageous it is for improving the strength of the heat insulating material according to the rule of mixtures. In addition, the blending amount of the resin binder, which is a cause of thermal degradation of the heat insulating material, relatively decreases with an increase in the blending amount of the inorganic nanoparticles, and therefore, it is advantageous for improving the heat resistance of the heat insulating material.

Therefore, due to reduction in the thermal degradation of the resin binder due to a great blending amount of the above-described inorganic nanoparticles and the heat insulating effect of the above-described hollow particles, the heat resistance of the heat insulating material can be enhanced while the heat insulating properties of the heat insulating material are ensured.

Note that the film formation properties of the heat insulating material are degraded when the percentage of the inorganic nanoparticles is excessively high, and for this reason, the upper limit of such a percentage is preferably 55% by volume.

The inorganic nanoparticle preferably has an average particle size (a "number-average particle size," the same also applies below) of equal to or smaller than 500 nm. As the inorganic nanoparticle, at least one type selected from a silica nanoparticle, an alumina nanoparticle, and a zirconia nanoparticle is preferably employed.

In one embodiment, a surface of the inorganic nanoparticle is subjected to hydrophobization treatment. As the hydrophobization treatment, chemical modification treatment with an organic compound or surface modification treatment with fluorine plasma can be preferably employed. In one preferred embodiment, in a case where a silica nanoparticle is employed as the inorganic nanoparticle, the inorganic nanoparticle is a modified silica nanoparticle whose surface is modified with a phenyl group. With this configuration, the hydrophobic properties of the silica nanoparticle are enhanced, and therefore, the dispersibility of the silica nanoparticles in the silicone-based resin binder is enhanced and it is advantageous for reducing the thermal degradation of the heat insulating material. Particularly, the phenyl group has favorable compatibility with the silicone-based resin, and therefore, it is advantageous for dispersing the silica nanoparticles.

By modification with the phenyl group, the defects (e.g., the voids) as the point of origin of cracks as described above are less likely to be caused in the silicone-based resin. Further, the heat resistance of the phenyl group itself is also high.

As described above, since the heat resistance of the phenyl group itself with which the surface of the silica nanoparticle is modified is high and the dispersibility of the silica nanoparticle is enhanced and the defects as the point of origin of cracks are less likely to be caused in the silicone-based resin by modification with such a phenyl group, it is advantageous for reducing the thermal degradation of the heat insulating material.

In one embodiment, the number-average particle size of the hollow particles is equal to or smaller than 30 µm. Preferably, the hollow particle has an average particle size of equal to or smaller than 10 µm. The lower limit of the average particle size can be 1 µm, for example.

In one embodiment, each hollow particle is an inorganic hollow particle. The hollow rate of the hollow particle is preferably equal to or greater than 60% by volume and more preferably equal to or greater than 70% by volume. The blending amount of the hollow particles in the heat insulating material is equal to or greater than 30% by volume and equal to or smaller than 60% by volume and more preferably equal to or greater than 40% by volume and equal to or smaller than 55% by volume.

The heat insulating material can be, for example, provided on a surface forming a combustion chamber of an engine. In this case, the thickness of the heat insulating material is preferably equal to or greater than 20 µm and equal to or smaller than 150 µm, and more preferably equal to or greater than 25 µm and equal to or smaller than 125 µm, equal to or greater than 25 µm and equal to or smaller than 100 µm, equal to or greater than 30 µm and equal to or smaller than 100 µm, or equal to or greater than 40 µm and equal to or smaller than 100 µm.

Nanoparticle dispersion liquid disclosed herein is one suitable for production of the above-described heat insulating material or a later-described heat insulating layer, nanoparticles being dispersed in a reactive silicone-based resin solution.

The percentage of the nanoparticles in the total amount of silicone-based resin and the nanoparticles upon reaction and curing of the resin solution is equal to or greater than 10% by volume and equal to or smaller than 55% by volume.

The Hansen solubility parameter (HSP) distance between the nanoparticle and the resin solution is equal to or smaller than 8.5 MPa^{0.5}.

For reducing the thermal degradation of the heat insulating material or the heat insulating layer by a great blending amount of the nanoparticles, it is important to enhance the dispersibility of the nanoparticles in the resin binder. On this point, according to the above-described nanoparticle dispersion liquid, the HSP distance between the nanoparticle and the resin solution decreases to equal to or smaller than 8.5 MPa^{0.5} as described above, and therefore, compatibility between the nanoparticle and the resin solution can be enhanced and a state in which the nanoparticles are uniformly dispersed in the resin solution can be held for a long period of time. Using the nanoparticle dispersion liquid, e.g., the heat insulating material in which the nanoparticles are uniformly dispersed in the silicone-based resin binder is easily obtained, and it is advantageous for improving the heat resistance of the heat insulating material etc.

In one embodiment of the nanoparticle dispersion liquid, the nanoparticle is a silica nanoparticle. With the silica nanoparticles, it is advantageous for reducing the thermal degradation of the resin binder when the nanoparticle dispersion liquid is provided for production of the heat insulating material etc. Since the thermal conductivity of the silica nanoparticle is low, it is advantageous for improving the heat insulating properties when the nanoparticle dispersion liquid is provided for production of the heat insulating material etc.

In one embodiment of the nanoparticle dispersion liquid, the silica nanoparticle is a modified silica nanoparticle having a phenyl group on a surface thereof. With this configuration, the nanoparticle dispersion liquid can be provided for production of the heat insulating material etc. to reduce the thermal degradation thereof.

In one embodiment of the nanoparticle dispersion liquid, toluene is contained as a solvent of the resin solution. Toluene allows the reactive silicone-based resin to be dissolved well, and can be added to the reactive silicone-based resin solution to decrease the HSP distance between the resin solution and the silica nanoparticle.

Preferably, the blending amount of toluene in the resin solution is equal to or greater than 30% by volume and equal to or smaller than 70% by volume. With this configuration, the HSP distance between the resin solution and the silica nanoparticle is easily set to equal to or smaller than 8.5 MPa^{0.5}.

In one embodiment of the nanoparticle dispersion liquid, the above-described hollow particles are further contained. With this configuration, production of the heat insulating material etc. from the nanoparticle dispersion liquid containing the hollow particles is facilitated.

A nanoparticle dispersion liquid production method disclosed herein includes the resin solution preparation step of preparing a reactive silicone-based resin solution and
the dispersion step of dispersing nanoparticles by addition of the nanoparticles to the resin solution.

The HSP value of the resin solution is, at the resin solution preparation step, adjusted by addition of a solvent such that an HSP distance between the nanoparticle and the resin solution is equal to or smaller than 8.5 MPa^{0.5.}

The percentage of the nanoparticles in the total amount of silicone-based resin and the nanoparticles upon reaction and curing of the resin solution is, at the dispersion step, equal to or greater than 10% by volume and equal to or smaller than 55% by volume.

With this configuration, the nanoparticle dispersion liquid, in which the nanoparticles are uniformly dispersed in the silicone-based resin solution, suitable for production of the heat insulating material etc. is obtained, and it is advantageous for holding such a uniform dispersion state for a long period of time.

In one embodiment of the nanoparticle dispersion liquid, the nanoparticle is a silica nanoparticle. With this configuration, the nanoparticle dispersion liquid, which has a high heat resistance and high heat insulating properties, suitable for production of the heat insulating material etc. can be obtained.

In one embodiment of the method for manufacturing the nanoparticle dispersion liquid, the silica nanoparticle is a modified silica nanoparticle having a phenyl group on a surface thereof. With this configuration, the nanoparticle dispersion liquid, which has a high heat resistance, suitable for production of the heat insulating material etc. can be obtained.

In one embodiment of the method for manufacturing the nanoparticle dispersion liquid, toluene is used as the solvent at the resin solution preparation step. With toluene, the reactive silicone-based resin is dissolved well, and the HSP value of the resin solution is easily adjusted such that the HSP distance between the silica nanoparticle and the resin solution is equal to or smaller than 8.5 MPa^{0.5}. In one embodiment, the blending amount of toluene in the resin solution is equal to or greater than 30% by volume and equal to or smaller than 70% by volume.

In one embodiment of the method for manufacturing the nanoparticle dispersion liquid, the method further includes the step of dispersing hollow particles in the resin solution by addition of the hollow particles to the resin solution. With this configuration, the nanoparticle dispersion liquid, which contains the hollow particles, suitable for production of the heat insulating material etc. can be obtained.

The method for producing a heat insulating material containing many hollow particles, a silicone-based resin binder, and nanoparticles as disclosed herein includes
the step of obtaining the mixture of the hollow particles and nanoparticle dispersion liquid in which the nanoparticles are dispersed in the reactive silicone-based resin solution,
the step of molding an item by means of the mixture, and
the step of burning the item molded.

By such a method, the heat insulating material is obtained, in which the nanoparticles are uniformly dispersed in the silicone-based resin binder and which contains the hollow particles and has a high heat resistance.

The method for producing a heat insulating material containing many hollow particles, a silicone-based resin binder, and nanoparticles as disclosed herein includes
the step of molding an item by means of the nanoparticle dispersion liquid containing the hollow particles, and
the step of burning the item molded.

By such a method, the heat insulating material is obtained, in which the nanoparticles are uniformly dispersed in the silicone-based resin binder and which contains the hollow particles and has a high heat resistance.

The method for producing an engine including a heat insulating layer on a surface forming a combustion chamber as disclosed herein includes
the step of obtaining the mixture of hollow particles and nanoparticle dispersion liquid (containing no hollow particles) in which nanoparticles are dispersed in the reactive silicone-based resin solution,
the step of forming a coating layer from the mixture applied to the surface forming the combustion chamber, and
the step of forming, by burning of the coating layer, the heat insulating layer whose thickness is equal to or greater than 20 µm and equal to or smaller than 150 µm.

The method for producing an engine including a heat insulating layer on a surface forming a combustion chamber as disclosed herein includes
the step of forming a coating layer from the nanoparticle dispersion liquid, which contains the hollow particles, applied to the surface forming the combustion chamber, and
the step of forming, by burning of the coating layer, the heat insulating layer whose thickness is equal to or greater than 20 µm and equal to or smaller than 150 µm.

In each engine production method described above, the thickness of the heat insulating layer is preferably equal to or greater than 25 µm and equal to or smaller than 125 µm, equal to or greater than 25 µm and equal to or smaller than 100 µm, equal to or greater than 30 µm and equal to or smaller than 100 µm, or equal to or greater than 40 µm and equal to or smaller than 100 µm.

The method for producing a heat insulating layer containing many hollow particles, a silicone-based resin binder, and nanoparticles as disclosed herein includes
the step of preparing a reactive silicone-based resin solution for the binder,
the step of preparing particle dispersion liquid by addition of the hollow particles and the nanoparticles to the resin solution,
the step of forming a coating layer from the particle dispersion liquid applied to a base material, and
the step of forming the heat insulating layer by burning of the coating layer.

The HSP value of the resin solution is, at the resin solution preparation step, adjusted by addition of a solvent such that the HSP distance between the nanoparticle and the resin solution is equal to or smaller than 8.5 MPa^{0.5.}

For reducing the thermal degradation of the heat insulating layer by a great blending amount of the nanoparticles, it is important to enhance the dispersibility of the nanoparticles in the resin binder. On this point, according to the above-described manufacturing method, the HSP distance between the nanoparticle and the resin solution decreases to equal to or smaller than 8.5 MPa^{0.5} by adjustment of the HSP value of the resin solution. Thus, the compatibility between the nanoparticle and the resin solution is enhanced and uniform dispersion of the nanoparticles in the resin solution at the step of adjusting the particle dispersion liquid is facilitated. As a result, due to the heat insulating effect by the hollow particles and the effect of reducing the thermal degradation of the resin binder by the nanoparticles, the heat insulating layer having high heat insulating properties and excellent heat resistance is obtained.

In one embodiment, the percentage of the nanoparticles in the total amount of the resin binder and the nanoparticles of the heat insulating layer is equal to or greater than 10% by volume and equal to or smaller than 55% by volume. Since the percentage of the nanoparticles is equal to or greater than 10% by volume, the effect of reducing the thermal degradation of the resin binder becomes noticeable. Note that film formation properties when the base material is coated with the particle dispersion liquid are degraded when such a percentage is excessively high, and for this reason, the upper limit of such a percentage is preferably 55% by volume.

In one embodiment, a silica nanoparticle is contained as the nanoparticle. With the silica nanoparticles, it is advantageous for reducing the thermal degradation of the resin binder. Since the thermal conductivity of the silica nanoparticle is low, it is advantageous for improving the heat insulating properties of the heat insulating layer.

In one embodiment, the silica nanoparticle is a modified silica nanoparticle having a phenyl group on a surface thereof. Accordingly, as previously described in description of the heat insulating material, since the heat resistance of the phenyl group itself with which the surface of the silica nanoparticle is modified is high and the dispersibility of the silica nanoparticle is enhanced and the defects as the point of origin of cracks are less likely to be caused in the silicone-based resin by modification with such a phenyl group, the heat insulating layer having a high heat resistance is obtained.

In one embodiment, toluene is contained as the solvent in a case where the silica nanoparticle is employed as the nanoparticle. Toluene allows the reactive silicone-based resin to be dissolved well, and can be added to the reactive silicone-based resin solution to decrease the HSP distance between the resin solution and the silica nanoparticle.

Preferably, the blending amount of toluene in the resin solution is equal to or greater than 30% by volume and equal to or smaller than 70% by volume. With this configuration, the HSP distance between the resin solution and the silica nanoparticle is easily set to equal to or smaller than 8.5 MPa^{0.5}.

The method for producing a heat insulating layer containing many hollow particles, a silicone-based resin binder, and nanoparticles as disclosed herein includes
the step of obtaining the mixture of the hollow particles and nanoparticle dispersion liquid in which the nanoparticles are dispersed in the reactive silicone-based resin solution,
the step of forming a coating layer from the mixture applied to a base material, and
the step of forming the heat insulating layer by burning of the coating layer.

By such a method, the heat insulating layer can be easily obtained, in which the nanoparticles are uniformly dispersed in the silicone-based resin binder and which contains the hollow particles and has a high heat resistance.

The method for producing a heat insulating layer containing many hollow particles, a silicone-based resin binder, and nanoparticles as disclosed herein includes
the step of forming a coating layer from the nanoparticle dispersion liquid, which contains the hollow particles, applied to a base material, and
the step of forming the heat insulating layer by burning of the coating layer.

By such a method, the heat insulating layer can be easily obtained, in which the nanoparticles are uniformly dispersed in the silicone-based resin binder and which contains the hollow particles and has a high heat resistance.

In one embodiment of each heat insulating layer production method described above, the base material is an engine component forming a combustion chamber of an engine.

The heat insulating layer is formed to have a thickness of equal to or greater than 20 µm and equal to or smaller than 150 µm on a surface of the engine component forming the combustion chamber.

The thickness of the heat insulating layer is preferably equal to or greater than 25 µm and equal to or smaller than 125 µm, equal to or greater than 25 µm and equal to or smaller than 100 µm, equal to or greater than 30 µm and equal to or smaller than 100 µm, or equal to or greater than 40 µm and equal to or smaller than 100 µm.

### ADVANTAGES OF THE INVENTION

According to the heat insulating material of the present invention, the heat insulating material contains many hollow particles, the silicone-based resin binder, and the inorganic nanoparticles and the percentage of the inorganic nanoparticles in the total amount of the resin binder and the inorganic nanoparticles is equal to or greater than 10% by volume and equal to or smaller than 55% by volume, and therefore, due to the heat insulating effect by the hollow particles and the effect of reducing the thermal degradation of the resin binder by the inorganic nanoparticles, the heat resistance of the heat insulating material can be dramatically improved while the heat insulating properties of the heat insulating material are ensured.

According to the nanoparticle dispersion liquid of the present invention, since the nanoparticles are dispersed in the reactive silicone-based resin solution in the nanoparticle dispersion liquid, the percentage of the nanoparticles in the total amount of the silicone-based resin and the nanoparticles upon reaction and curing of the resin solution is equal to or greater than 10% by volume and equal to or smaller than 55% by volume, and the HSP distance between the nanoparticle and the resin solution is equal to or smaller than 8.5 MPa^{0.5}, e.g., the heat insulating material in which the nanoparticles are uniformly dispersed in the silicone-based resin binder is easily obtained and it is advantageous for improving the heat resistance of the heat insulating material etc.

According to the nanoparticle dispersion liquid production method of the present invention, the nanoparticle dispersion liquid in which the nanoparticles are uniformly dispersed in the silicone-based resin solution is obtained, and it is advantageous for holding such a uniform dispersion state for a long period of time.

According to the heat insulating layer production method of the present invention, since the method includes the step of preparing the reactive silicone-based resin solution for the binder, the step of preparing the particle dispersion liquid by addition of the hollow particles and the nanoparticles to the resin solution, the step of forming the coating layer from the particle dispersion liquid applied to the base material, and the step of forming the heat insulating layer by burning of the coating layer and the HSP value of the resin solution is adjusted by addition of the solvent such that the HSP distance between the nanoparticle and the resin solution is equal to or smaller than 8.5 MPa^{0.5} at the resin solution preparation step, the heat insulating layer having high heat insulating properties and excellent heat resistance is easily obtained.

According to the method for producing the heat insulating material by means of the nanoparticle dispersion liquid according to the present invention, the heat insulating material can be easily obtained, in which the nanoparticles are uniformly dispersed in the silicone-based resin binder and which contains the hollow particles and has a high heat resistance.

According to the method for producing the heat insulating layer by means of the nanoparticle dispersion liquid according to the present invention, the heat insulating layer can be easily obtained, in which the nanoparticles are uniformly dispersed in the silicone-based resin binder and which contains the hollow particles and has a high heat resistance.

### BRIEF DESCRIPTION OF THE DRAWINGS

FIG. 1 is a cross-sectional view of an engine as an application example of the present invention.
FIG. 2 is a cross-sectional view showing a heat insulating layer on a top surface of a piston of the engine.
FIG. 3 is a partially-enlarged cross-sectional view of the heat insulating layer.
FIG. 4 is a graph showing a relationship between a toluene blending amount and an HSP distance.
FIG. 5 is a graph showing the thermodecomposition start temperature (a heat generation peak position in DTA) of each binder with different silica nanoparticle blending amounts.
FIG. 6 is a graph showing the TG curve of each of binders with silica nanoparticle blending amounts of 40% by volume and 0% by volume.
FIG. 7 is a graph showing a relationship between the silica nanoparticle blending amount and a binder volume retention.
FIG. 8 is a graph showing volume retentions for "No Nanoparticles" and "Great Nanoparticle Blending Amount."
FIG. 9 is a microscope image of the section of a heat insulating layer according to "Great Nanoparticle Blending Amount."
FIG. 10 is a graph showing a relationship between the nanoparticle blending amount and a pencil hardness.
FIG. 11 is a graph showing a relationship between a nanoparticle size and a heat insulating layer surface hardness.

### DETAILED DESCRIPTION

Hereinafter, an embodiment of the present invention will be described with reference to the drawings. The following description of a preferred embodiment is merely illustrative in nature and is not intended to limit the present invention and applications or uses thereof.

### <Heat Insulating Material and Heat Insulating Layer>

A heat insulating material can be in a plate shape, a sheet shape, or other suitable shapes in accordance with a heat insulating target. A heat insulating layer is configured such that the heat insulating material is provided in the form of a layer on a surface of a base material as the heat insulating target. Hereinafter, the preferred embodiment will be described, but is not intended to limit the present invention.

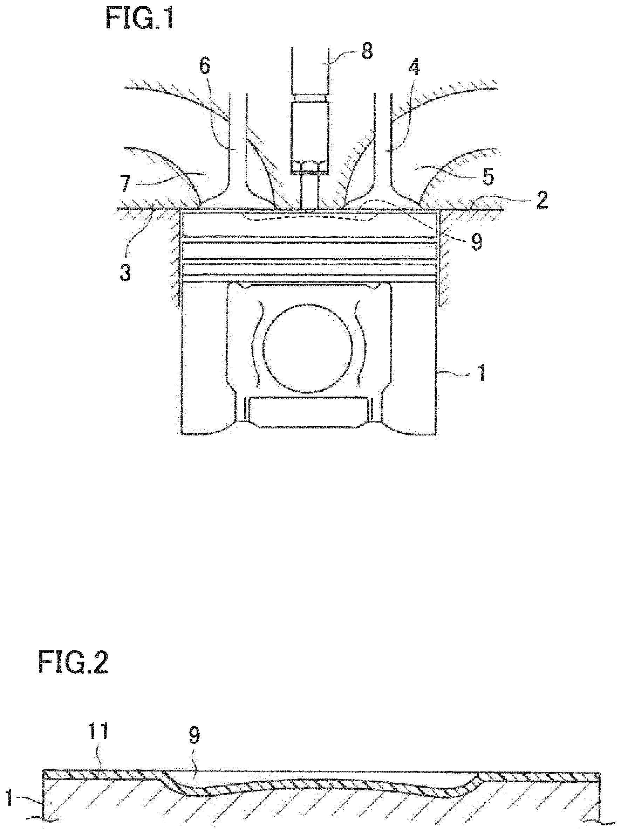

In FIG. 1, 1 indicates an aluminum alloy piston of an engine as the base material on which the heat insulating layer is formed, 2 indicates a cylinder block, 3 indicates a cylinder head, 4 indicates an intake valve that opens/closes an intake port 5 of the cylinder head 3, 6 indicates an exhaust valve that opens/closes an exhaust port 7, and 8 indicates a fuel injection valve. A combustion chamber of the engine is formed by a top surface of the piston 1, the cylinder block 2, the cylinder head 3, and front surfaces (surfaces facing the combustion chamber) of umbrella portions of the intake and exhaust valves 4, 6. Defined above the top surface of the piston 1 is a cavity 9. Note that a spark plug is not shown.

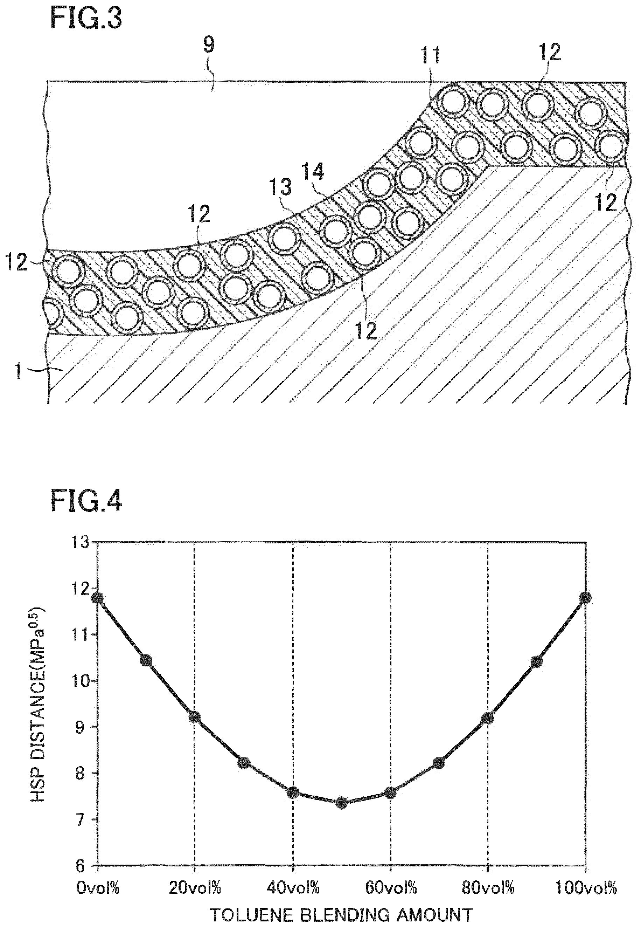

As shown in FIG. 2, a heat insulating layer 11 is formed on the top surface of the piston 1. As shown in FIG. 3, the heat insulating layer 11 includes many hollow particles 12 made of inorganic oxide or ceramics and a silicone-based resin binder 13 holding the hollow particles 12 on the piston 1 and filling a portion among the hollow particles 12 to form the matrix of the heat insulating layer 11, and nanoparticles 14 are dispersed in the resin binder 13 (in FIG. 3, the nanoparticles 14 are indicated by points).

The thickness (hereinafter referred to as a "film thickness") of the heat insulating layer 11 is, for example, equal to or greater than 20 µm and equal to or smaller than 150 µm and preferably equal to or greater than 40 µm and equal to or smaller than 100 µm. As the hollow particle 12, one having a µm-order particle size smaller than the film thickness of the heat insulating layer 11 is used. Preferably, the hollow particle 12 has an average particle size of equal to or smaller than 30 µm, for example. For example, a hollow particle with an average particle size of equal to or smaller than 10 µm can be preferably employed. The average particle size of the nanoparticle 14 is preferably equal to or smaller than 500 nm, more preferably equal to or greater than 1 nm and equal to or smaller than 200 nm, and much more preferably equal to or greater than 1 nm and equal to or smaller than 120 nm.

Note that the above-described numeric value range is a preferred range in a case where the heat insulating layer 11 is provided on the surface forming the combustion chamber of the engine, and is not limitative. In a case where the heat insulating layer is provided on, e.g., equipment other than the surface forming the combustion chamber, the particle size of the hollow particle 12 and the film thickness of the heat insulating layer 11 can be further decreased or increased.

Preferably, an inorganic hollow particle is employed as the hollow particle 12, and a ceramic-based hollow particle containing a Si-based oxide component (e.g., silica) or an Al-based oxide component (e.g., alumina) such as a glass balloon, a glass bubble, a fly ash balloon, a shirasu balloon, a silica balloon, or an aluminosilicate balloon is employed. The hollow rate of the hollow particle is preferably equal to or greater than 60% by volume and more preferably equal to or greater than 70% by volume.

As the resin binder 13, silicone-based resin containing three-dimensional polymer with a high degree of branching and represented by methylsilicone-based resin and methylphenyl silicone-based resin can be preferably used, for example. Specific examples of the silicone-based resin may include polyalkylphenylsiloxane.

As the nanoparticle 14, an inorganic nanoparticle made of an inorganic compound such as zirconia, alumina, silica, or titania, a metal nanoparticle such as Ti, Zr, or Al, etc. can be employed, and particularly, a silica nanoparticle whose surface is modified with a phenyl group can be preferably employed. The nanoparticle may be hollow or solid.

The blending amount (the percentage of the nanoparticles 14 in the total amount of the resin binder 13 and the nanoparticles 14 after burning, the same also applies below) of the nanoparticles 14 is preferably equal to or greater than 10% by volume and equal to or smaller than 55% by volume. The blending amount (the percentage of the hollow particles 12 in the heat insulating layer 11 after burning, the same also applies below) of the hollow particles 12 can be adjusted in accordance with, e.g., heat insulating properties required for the heat insulating layer. The blending amount of the hollow particles 12 can be, for example, equal to or greater than 30% by volume and equal to or smaller than 60% by volume. Such a blending amount is more preferably equal to or greater than 40% by volume and equal to or smaller than 55% by volume.

### <Production of Heat Insulating Layer>

The above-described heat insulating layer can be produced by a method described below. This production method includes a nanoparticle dispersion liquid preparation step, the coating step of coating the base material with nanoparticle dispersion liquid to form a coating layer, and a burning step of burning the coating layer to form the heat insulating layer.

### (Preparation of Nanoparticle Dispersion Liquid)

This step includes the step of preparing a reactive silicone-based resin solution for the binder and the step of dispersing the nanoparticles in the resin solution.

### Resin Solution Preparation

At this step, a solvent is added to a raw material resin solution (the reactive silicone-based resin solution) such that an HSP distance between the nanoparticle and the reactive silicone-based resin solution is equal to or smaller than 8.5 MPa^{0.5}, and in this manner, the HSP value of the resin solution is adjusted. In this manner, the binder reactive silicone-based resin solution to be provided for the next dispersion step is obtained.

The above-described raw material resin solution may be of a one-component/addition-curing type or a dehydration condensation curing type, and the one-component/addition-curing type can be preferably used. As the solvent, e.g., toluene or xylene can be preferably used as long the HSP value of the reactive silicone-based resin solution can be adjusted such that the above-described HSP distance decreases.

The blending amount of the solvent varies to some extend depending on the HSP value of each of the raw material resin solution, the nanoparticle, and the solvent, but the above-described HSP distance can be close to equal to or smaller than 8.5 MPa^{0.5} as long as the blending amount of the solvent in the reactive silicone-based resin solution is equal to or greater than about 30% by volume and equal to or smaller than about 70% by volume.

### Dispersion of Nanoparticles

The nanoparticles are added to the reactive silicone-based resin solution whose HSP value has been adjusted by addition of the solvent as described above, and by agitation, the nanoparticle dispersion liquid is prepared. The blending amount of the nanoparticles is set such that the percentage of the nanoparticles in the total amount of the silicone-based resin and the nanoparticles upon reaction and curing of the above-described resin solution is equal to or greater than 10% by volume and equal to or smaller than 55% by volume.

The nanoparticles may be added to the resin solution and the resultant may be agitated, and by further addition of the hollow particles and agitation, the nanoparticle dispersion liquid containing the hollow particles may be prepared. The blending amount of the hollow particles can be adjusted in accordance with the required heat insulating properties. Such a blending amount can be, for example, equal to or greater than 30% by volume and equal to or smaller than 60% by volume.

The obtained nanoparticle dispersion liquid can be stored until production of the heat insulating material etc. The HSP distance between the nanoparticle and the reactive silicone-based resin solution decreases to equal to or smaller than 8.5 MPa^{0.5} as described above, and therefore, a nanoparticle dispersion state in such a resin solution is maintained even during storage.

### (Coating with Nanoparticle Dispersion Liquid)

In the case of a nanoparticle dispersion liquid containing no hollow particles described above, the coating layer is formed in such a manner that the base material is coated with a mixture of the nanoparticle dispersion liquid and the hollow particles, and in the case of a nanoparticle dispersion liquid to which the above-described hollow particles have been added in advance, the coating layer is formed in such a manner that the base material is directly coated with such dispersion liquid. Such coating can be performed using a spray. Coating may be performed using a brush or a spatula. Upon such coating, the viscosity of the nanoparticle dispersion liquid can be adjusted to a viscosity suitable for coating by addition of the solvent.

### (Burning of Coating Layer)

The coating layer on the base material is dried and burnt, and in this manner, the heat insulating layer is formed. That is, by such burning, the reactive silicone-based resin is cured, and the heat insulating layer containing the hollow particles and the nanoparticles is obtained. Burning can be performed in such a manner that the coating layer is heated at a temperature of about 100°C to about 200°C for several minutes to several hours.

### <Case of Production of Heat Insulating Material>

In the case of the nanoparticle dispersion liquid containing no hollow particles described above, an item in an intended heat insulating material shape is molded using the mixture of the nanoparticle dispersion liquid and the hollow particles, and the heat insulating material is obtained in such a manner that the obtained item is dried and burnt.

In the case of the nanoparticle dispersion liquid containing the above-described hollow particles, an item in an intended heat insulating material shape is molded using such nanoparticle dispersion liquid, and the heat insulating material is obtained in such a manner that the obtained item is dried and burnt.

### <Specific Example of Resin Solution Preparation>

Next, the resin solution preparation step will be described based on a specific example where toluene is used as the solvent. The HSP values of the used raw material resin solution, the silica nanoparticles as the nanoparticles whose surfaces have been modified with the phenyl group, and toluene are as in Table 1. In the HSP section of Table 1, δD is an energy term derived from dispersion force between molecules, δP is an energy term derived from polar force between molecules, δH is an energy term derived from hydrogen bonding force between molecules, and the unit thereof is MPa^{0.5}. RO is an interaction radius (in units of MPa^{0.5}).

**[Table 1]**

| HSP | δD | δP | δH | Interaction Radius |
|---|---|---|---|---|
| Nanoparticles | 19.0 | 8.4 | 11.3 | 7.0 |
| Raw Material Resin Solution | 24.8 | 10.2 | 10.8 | 18.3 |
| Toluene | 18.0 | 1.4 | 2.0 | |

Supposing that the HSP value of the raw material resin solution is δD1, δP1, and δH1, the HSP value of the silica nanoparticle is δD2, δP2, and δH2, and the HSP distance (in units of MPa^{0.5}) between the raw material resin solution and the nanoparticle is Ra, (Ra)² = 4 × (δD₂ - δD₁)² + (δP₂ - δP₁)² + (δH₂ - δH₁)² is satisfied. According to Table 1, the HSP distance (Ra) between the raw material resin solution and the silica nanoparticle is 11.8 MPa^{0.5}.

The HSP value (δD, δP, δH) of the reactive silicone-based resin solution obtained by addition of toluene to the raw material resin solution can be obtained as the arithmetic average of the HSP values of the raw material resin solution and toluene from the volume ratio thereof. The HSP value (δD, δP, δH) of the reactive silicone-based resin solution and the HSP distance between such a resin solution and toluene for various toluene blending amounts (% by volume) are as in Table 2. FIG. 4 shows, by a graph, a relationship between the toluene blending amount and the HSP distance.

**[Table 2]**

| HSP | δD | δP | δH | HSP Distance Ra |
|---|---|---|---|---|
| 0 vol% | 24.8 | 10.2 | 10.8 | 11.8 |
| 10 vol% | 24.1 | 9.4 | 10.0 | 10.4 |
| 20 vol% | 23.5 | 8.5 | 9.1 | 9.2 |
| 30 vol% | 22.8 | 7.6 | 8.2 | 8.2 |
| 40 vol% | 22.1 | 6.7 | 7.3 | 7.6 |
| 50 vol% | 21.4 | 5.8 | 6.4 | 7.3 |
| 60 vol% | 20.7 | 4.9 | 5.5 | 7.6 |
| 70 vol% | 20.0 | 4.1 | 4.7 | 8.2 |
| 80 vol% | 19.4 | 3.2 | 3.8 | 9.2 |
| 90 vol% | 18.7 | 2.3 | 2.9 | 10.4 |
| 100 vol% | 18.0 | 1.4 | 2.0 | 11.8 |

According to Table 2 and FIG. 4, it shows that as long as the toluene blending amount is equal to or greater than about 30% by volume and equal to or smaller than about 70% by volume in this case, the HSP distance between the reactive silicone-based resin solution and the silica nanoparticle is equal to or smaller than 8.5 MPa^{0.5} and favorable dispersibility of the silica nanoparticles in the above-described resin solution is exhibited accordingly.

### <Advantages of Great Nanoparticle Blending Amount>

### (Heat Resistance; TG-DTA)

For a plurality of nanoparticle-containing binders (with no hollow particles) obtained in such a manner that the silica nanoparticles are dispersed in different blending amounts in the silicone-based resin, heat resistance was evaluated by thermogravimeter-differential thermal analysis (TG-DTA). The silicone-based resin is of the addition-curing type. The silica nanoparticle is of a phenyl group modified type with an average particle size of 100 nm.

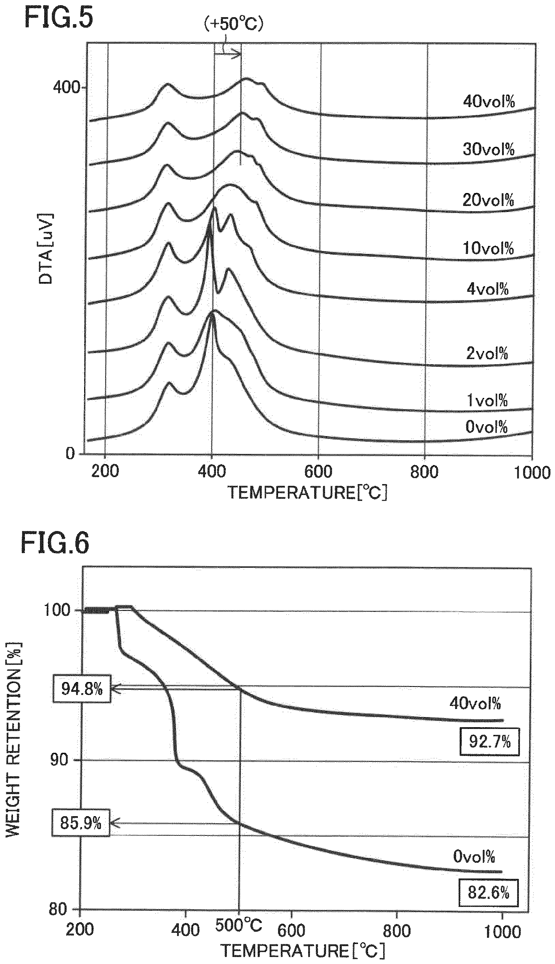

FIG. 5 shows the thermodecomposition start temperature (a heat generation peak position in the DTA) of each nanoparticle-containing binder (after burning). According to this figure, the thermodecomposition start temperature increases as the blending amount of the silica nanoparticles increases. It shows that when the blending amount of the silica nanoparticles reaches equal to or greater than 10% by volume, the thermodecomposition start temperature increases as compared to the binder with a zero silica nanoparticle blending amount. When such a blending amount reaches equal to or greater than 20% by volume, the thermodecomposition start temperature increases as compared to the binder with the zero silica nanoparticle blending amount by about 50°C.

FIG. 6 shows the TG curves of the binder with the zero silica nanoparticle blending amount and the binder with a silica nanoparticle blending amount of 40% by volume. At a silica nanoparticle blending amount of 40% by volume, a weight retention is 94.8% at a temperature of 500°C and 92.7% even at 1000°C.

As described above, it shows that a great silica nanoparticle blending amount is effective for improving the heat resistance of the heat insulating material.

### (Heat Resistance; Volume Retention)

For each of nanoparticle-containing binders (with no hollow particles) with phenyl-group modified type silica nanoparticle blending amounts of 1% by volume, 4% by volume, 10% by volume, and 40% by volume, the heat insulating layer was formed on the blasted surface of the aluminum alloy base material by the above-described production method. Such a heat insulating layer was detached from the base material, and the volume retention when a thermal load for holding a temperature of 430°C for six hours is provided was measured. A temperature of 430°C is a temperature at which an organic component in the binder is decomposed.

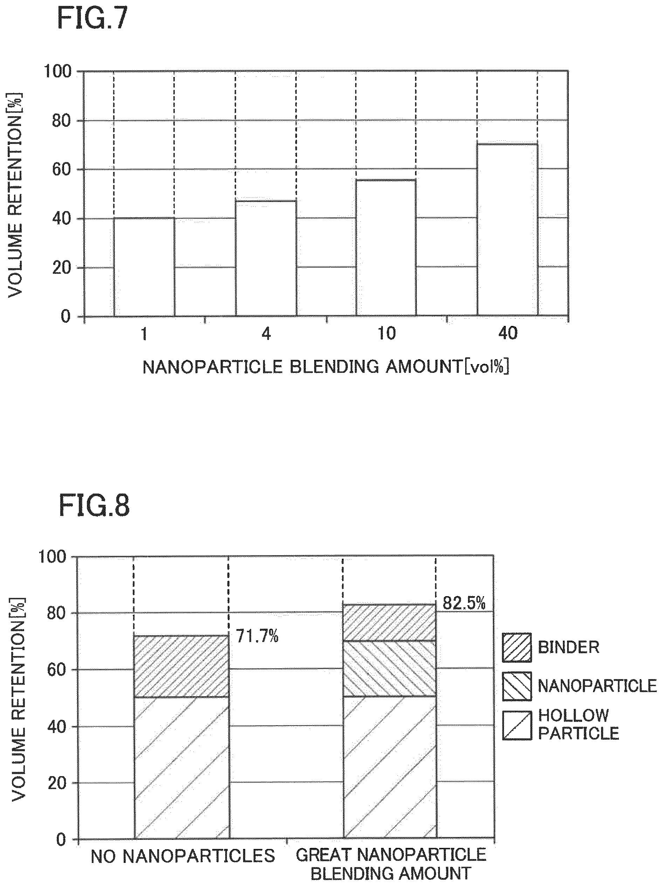

The results are shown in FIG. 7. For the binder with a silica nanoparticle blending amount of 40% by volume, a volume shrinkage amount is about the half of that of the binder with 1% by volume.

For "No Nanoparticles" and "Great Nanoparticle Blending Amount" shown in Table 3, the heat insulating layer was produced by a method similar to that of the above-described nanoparticle-containing binder and was detached from the base material, and thereafter, each volume retention was measured by a similar method. The hollow particle is an aluminosilicate fine balloon with an average particle size of 5 µm, the resin binder is addition-curing type silicone resin, and the nanoparticle is a phenyl group modified type silica nanoparticle with an average particle size of 100 nm. The numeric values in the table show the blending amounts after burning. For "Great Nanoparticle Blending Amount," the blending amount of the silica nanoparticles, i.e., the percentage of the silica nanoparticles in the total amount of the resin binder and the silica nanoparticles after burning, is 40% by volume.

**[Table 3]**

| | Hollow Particles | Binder | Nanoparticles |
|---|---|---|---|
| No Nanoparticles | 50 vol% | 50 vol% | 0 vol% |
| Great Nanoparticle Blending Amount | 50 vol% | 30 vol% | 20 vol% |

The volume retention measurement results are shown in FIG. 8. "Great Nanoparticle Blending Amount" shows a higher volume retention than that for "No Nanoparticles" by 10% or more.

As described above, it shows that a great silica nanoparticle blending amount is effective for improving the heat resistance of the heat insulating material.

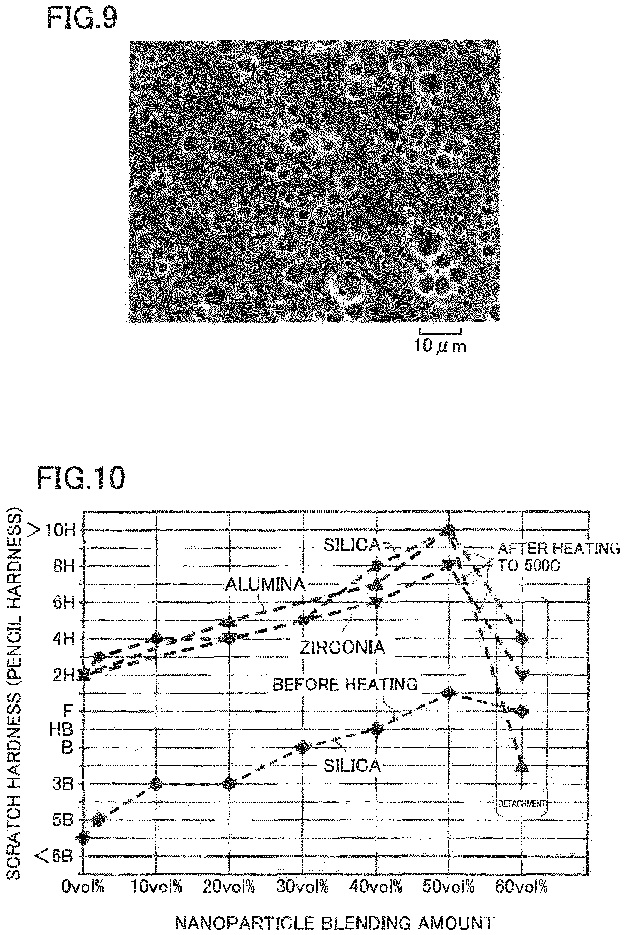

FIG. 9 shows a scanning electron microscope (SEM) image of the section of the heat insulating layer according to "Great Nanoparticle Blending Amount." According to such an image, no hollow particle damage and no void are shown.

### (Heat Resistance; Relationship between Nanoparticle Blending Amount and Heat Insulating Layer Surface Hardness)

For "No Nanoparticles" and "Great Nanoparticle Blending Amount" of Table 3, the surface of the heat insulating layer (a thickness of 50 µm), which is obtained by the above-described production method, on the base material was polished. For each heat insulating layer, heating treatment was performed, in which the temperature of the heat insulating layer is increased to 500°C from a room temperature over one hour and the heat insulating layer is cooled to the room temperature after having been held at 500°C for six hours. The pencil hardness (the scratch hardness) of the heat insulating layer before and after such heating treatment was checked. The results are shown in Table 4.

**[Table 4]**

| | No Nanoparticles | Great Nanoparticle Blending Amount |
|---|---|---|
| Before Heating Treatment | Pencil Hardness 5B to 6B | Pencil Hardness HB |
| After Heating Treatment | Pencil Hardness 2H | Pencil Hardness 8H |

According to Table 4, "Great Nanoparticle Blending Amount" shows a significantly-higher pencil hardness before and after heating than that for "No Nanoparticles."

As in Table 3, the pencil hardness (the scratch hardness) of the heat insulating layer before and after the above-described heating treatment was also checked for each case where the blending amount of the hollow particles is fixed to 50% by volume and the blending amount of the phenyl-group modified type silica nanoparticles with an average particle size of 100 nm is 10% by volume, 20% by volume, 30% by volume, 50% by volume, and 60% by volume. The results are shown as a graph in FIG. 10 in combination with the cases of nanoparticle blending amounts of 0% by volume and 40% by volume. For the case of employing an alumina nanoparticle with an average particle size of 100 nm as the nanoparticle and the case of employing a zirconia nanoparticle with an average particle size of 100 nm as the silica nanoparticle, a relationship between the nanoparticle blending amount and the scratch hardness of the heat insulating layer after the above-described heating treatment was also checked. The results are shown in FIG. 10 in combination with the case of the silica nanoparticles. As in the silica nanoparticle, a nanoparticle whose surface is modified with a phenyl group by hydrophobization treatment was used as any of the alumina nanoparticle and the zirconia nanoparticle.

According to FIG. 10, any of silica, alumina, and zirconia shows an increasing pencil hardness as the nanoparticle blending amount increases, and shows a peak pencil hardness at a nanoparticle blending amount of 50% by volume. As in the case of the silica nanoparticle, the cases of the alumina nanoparticle and the zirconia nanoparticle also show a high scratch hardness after heating to 500°C. Note that the case of 60% by volume is that a film formation failure has occurred in association with an increase in the viscosity of the particle dispersion liquid.

As described above, it shows that a great silica nanoparticle blending amount is effective for improving the hardness and heat resistance of the heat insulating material.

### (Heat Resistance; Relationship between Nanoparticle Size and Heat Insulating Layer Surface Hardness)

Phenyl group modified type silica nanoparticles with different average particle sizes were prepared, the heat insulating layer was formed on the surface of the base material by the above-described production method by means of each type of nanoparticle, and the pencil hardness (the scratch hardness) of the heat insulating layer before and after the above-described heating treatment was checked. As in the case of Table 3, the hollow particle is an aluminosilicate fine balloon with an average particle size of 5 µm and the resin binder is addition-curing type silicone resin. The hollow particle blending amount is 50% by volume, the resin binder blending amount is 30% by volume, and the nanoparticle blending amount is 20% by volume. That is, the percentage of the silica nanoparticles in the total amount of the resin binder and the silica nanoparticles after burning is 40% by volume.

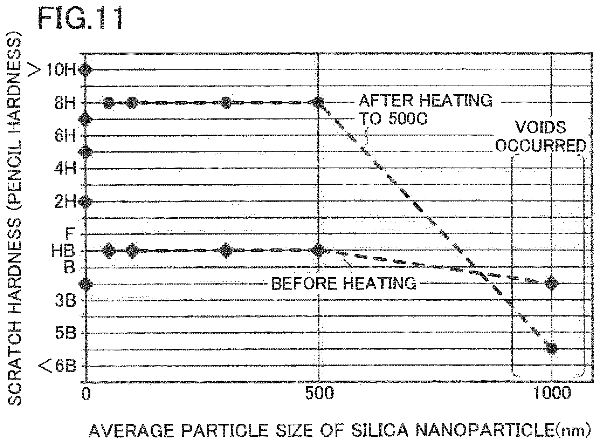

The results are shown in FIG. 11. According to this figure, when the silica nanoparticle average particle size is equal to or smaller than 500 nm, the scratch hardness after heating to 500°C is about 8 H regardless of the average particle size, and almost no influence of the average particle size is observed. The scratch hardness before heating is also about HB, and almost no influence of the average particle size is observed. On the other hand, when the average particle size is 1000 nm, voids are observed in the heat insulating layer, and the scratch hardness after heating to 500°C is greatly degraded. Thus, the nanoparticle preferably has an average particle size of equal to or smaller than 500 nm, for example.

Note that the heat insulating layer according to the present invention is applied to the top surface of the piston 1 in the above-described embodiment, but the present invention is not limited to this configuration and the heat insulating layer may be formed on other surfaces forming the combustion chamber of the engine, such as the lower surface of the cylinder head 3. Further, the present invention is not limited to the engine, and is also applicable to other types of industrial equipment and consumer equipment for which heat insulation is required.

### DESCRIPTION OF REFERENCE CHARACTERS

- 1: Piston (Base Material)
- 11: Heat Insulating Layer
- 12: Hollow Particle
- 13: Resin Binder
- 14: Nanoparticle

## Claims

1. A heat insulating material containing many hollow particles, a silicone-based resin binder, and a nanoparticle, comprising:
an inorganic nanoparticle as the nanoparticle,
a percentage of the inorganic nanoparticle in a total amount of the resin binder and the inorganic nanoparticle being equal to or greater than 10% by volume and equal to or smaller than 55% by volume.

2. The heat insulating material of claim 1, wherein
a surface of the inorganic nanoparticle is subjected to hydrophobization treatment.

3. The heat insulating material of claim 2, wherein
the inorganic nanoparticle is a modified silica nanoparticle whose surface is modified with a phenyl group.

4. The heat insulating material of any one of claims 1 to 3, wherein
a number-average particle size of the hollow particles is equal to or smaller than 30 µm.

5. The heat insulating material of any one of claims 1 to 4, wherein
each hollow particle is an inorganic hollow particle.

6. An engine comprising: the heat insulating material of any one of claims 1 to 5 on a surface forming a combustion chamber,
a thickness of the heat insulating material is equal to or greater than 20 µm and equal to or smaller than 150 µm.

7. A nanoparticle dispersion liquid, a nanoparticle being dispersed in a reactive silicone-based resin solution,
a percentage of the nanoparticle in a total amount of silicone-based resin and the nanoparticle upon reaction and curing of the resin solution being equal to or greater than 10% by volume and equal to or smaller than 55% by volume, and
an HSP distance between the nanoparticle and the resin solution is equal to or smaller than 8.5 MPa^{0.5}.

8. The nanoparticle dispersion liquid of claim 7, wherein
the nanoparticle is a silica nanoparticle.

9. The nanoparticle dispersion liquid of claim 8, wherein
a surface of the silica nanoparticle is modified with a phenyl group.

10. The nanoparticle dispersion liquid of claim 8 or 9, further comprising:
toluene as a solvent of the resin solution.

11. The nanoparticle dispersion liquid of claim 10, wherein
a blending amount of the toluene in the resin solution is equal to or greater than 30% by volume and equal to or smaller than 70% by volume.

12. The nanoparticle dispersion liquid of any one of claims 7 to 11, further comprising:
a hollow particle.

13. The nanoparticle dispersion liquid of claim 12, wherein
a number-average particle size of the hollow particle is equal to or smaller than 30 µm.

14. The nanoparticle dispersion liquid of claim 12 or 13, wherein
the hollow particle is an inorganic hollow particle.

15. A nanoparticle dispersion liquid production method, comprising:
a resin solution preparation step of preparing a reactive silicone-based resin solution; and
a dispersion step of dispersing a nanoparticle by addition of the nanoparticle to the resin solution,
an HSP value of the resin solution being, at the resin solution preparation step, adjusted by addition of a solvent such that an HSP distance between the nanoparticle and the resin solution is equal to or smaller than 8.5 MPa^{0.5},
a percentage of the nanoparticle in a total amount of silicone-based resin and the nanoparticle upon reaction and curing of the resin solution being, at the dispersion step, being equal to or greater than 10% by volume and equal to or smaller than 55% by volume.

16. The nanoparticle dispersion liquid production method of claim 15, wherein the nanoparticle is a silica nanoparticle.

17. The nanoparticle dispersion liquid production method of claim 16, wherein a surface of the silica nanoparticle is modified with a phenyl group.

18. The nanoparticle dispersion liquid production method of claim 16 or 17, wherein
at the resin solution preparation step, toluene is used as the solvent.

19. The nanoparticle dispersion liquid production method of claim 18, wherein
a blending amount of the toluene in the resin solution is equal to or greater than 30% by volume and equal to or smaller than 70% by volume.

20. The nanoparticle dispersion liquid production method of any one of claims 15 to 19, further comprising:
a step of dispersing a hollow particle by addition of the hollow particle to the resin solution.

21. A method for producing a heat insulating material containing many hollow particles, a silicone-based resin binder, and a nanoparticle, comprising:
a step of obtaining a mixture of the nanoparticle dispersion liquid of any one of claims 7 to 11 and the hollow particles;
a step of molding an item by means of the mixture; and
a step of burning the item molded.

22. A method for producing a heat insulating material containing many hollow particles, a silicone-based resin binder, and a nanoparticle, comprising:
a step of molding an item by means of the nanoparticle dispersion liquid of any one of claims 12 to 14; and
a step of burning the item molded.

23. A method for producing an engine including a heat insulating layer on a surface forming a combustion chamber, comprising:
a step of obtaining a mixture of the nanoparticle dispersion liquid of any one of claims 7 to 11 and a hollow particle;
a step of forming a coating layer from the mixture applied to the surface forming the combustion chamber; and
a step of forming, by burning of the coating layer, the heat insulating layer whose thickness is equal to or greater than 20 µm and equal to or smaller than 150 µm.

24. A method for producing an engine including a heat insulating layer on a surface forming a combustion chamber, comprising:
a step of forming a coating layer from the nanoparticle dispersion liquid of any one of claims 12 to 14 applied to the surface forming the combustion chamber; and
a step of forming, by burning of the coating layer, the heat insulating layer whose thickness is equal to or greater than 20 µm and equal to or smaller than 150 µm.

25. A method for producing a heat insulating layer containing many hollow particles, a silicone-based resin binder, and a nanoparticle, comprising:
a resin solution preparation step of preparing a reactive silicone-based resin solution for the binder; and
a step of preparing particle dispersion liquid by addition of the hollow particles and the nanoparticle to the resin solution;
a step of forming a coating layer from the particle dispersion liquid applied to a base material; and
a step of forming the heat insulating layer by burning of the coating layer,
an HSP value of the resin solution being, at the resin solution preparation step, adjusted by addition of a solvent such that an HSP distance between the nanoparticle and the resin solution is equal to or smaller than 8.5 MPa^{0.5.}

26. The heat insulating layer production method of claim 25, wherein
a percentage of the nanoparticle in a total amount of the resin binder and the nanoparticle of the heat insulating layer is equal to or greater than 10% by volume and equal to or smaller than 55% by volume.

27. The heat insulating layer production method of claim 25 or 26, wherein
a silica nanoparticle is contained as the nanoparticle.

28. The heat insulating layer production method of claim 27, wherein
a surface of the silica nanoparticle is modified with a phenyl group.

29. The heat insulating layer production method of claim 27 or 28, wherein toluene is contained as the solvent.

30. The heat insulating layer production method of claim 29, wherein
a blending amount of the toluene in the resin solution is equal to or greater than 30% by volume and equal to or smaller than 70% by volume.

31. The heat insulating layer production method of any one of claims 25 to 29, wherein
the base material is an engine component forming a combustion chamber of an engine, and
the heat insulating layer is formed to have a thickness of equal to or greater than 20 µm and equal to or smaller than 150 µm on a surface of the engine component forming the combustion chamber.

32. A method for producing a heat insulating layer containing many hollow particles, a silicone-based resin binder, and a nanoparticle, comprising:
a step of obtaining a mixture of the nanoparticle dispersion liquid of any one of claims 7 to 11 and the hollow particles;
a step of forming a coating layer from the mixture applied to a base material; and
a step of forming the heat insulating layer by burning of the coating layer.

33. The heat insulating layer production method of claim 32, wherein
the base material is an engine component forming a combustion chamber of an engine, and
the heat insulating layer is formed to have a thickness of equal to or greater than 20 µm and equal to or smaller than 150 µm on a surface of the engine component forming the combustion chamber.

34. A method for producing a heat insulating layer containing many hollow particles, a silicone-based resin binder, and a nanoparticle, comprising:
a step of forming a coating layer from the nanoparticle dispersion liquid of any one of claims 12 to 14 applied to a base material; and
a step of forming the heat insulating layer by burning of the coating layer.

35. The heat insulating layer production method of claim 34, wherein
the base material is an engine component forming a combustion chamber of an engine, and
the heat insulating layer is formed to have a thickness of equal to or greater than 20 µm and equal to or smaller than 150 µm on a surface of the engine component forming the combustion chamber.
